# EUROPÄISCHE PATENTANMELDUNG

(11) **EP 3 159 615 A1**
(43) Veröffentlichungstag der Anmeldung: **26.04.2017**
(21) Anmeldenummer: 16194287.5
(22) Anmeldetag: 18.10.2016
(51) Int. Cl.: F24D 3/14, F16L 3/26, F24F 5/00, F24F 13/32

(54) **HALTEFLÄCHE FÜR EIN FLÄCHENTEMPERIERUNGSELEMENT SOWIE DIESES UMFASSENDES FLÄCHENTEMPERIERUNGSELEMENT**

(30) Priorität: 23.10.2015 DE 202015105645 U
(71) Anmelder: REHAU AG + Co, 95111 Rehau (DE)
(72) Erfinder: Vohler, Tobias, 92318 Neumarkt (DE); Burkhardt, Oliver, 91080 Uttenreuth (DE)

(57) **Zusammenfassung**

Die vorliegende Erfindung bezieht sich auf eine Haltefläche (1) für ein Flächentemperierungssystem (6), die einen Träger (2), der eine Reliefstruktur mit tiefen Bereichen (4) und erhöhten Bereichen (3) aufweist; und ein unmittelbar auf den Träger (2) aufkaschiertes erstes Element (7) einer Klettverbindung (8) umfasst, wobei die Haltefläche (1) eine Mehrzahl von Durchbrüchen (9) aufweist und das erste Element (7) der Klettverbindung (8) in den erhöhten Bereichen (3) und optional an den Rändern zu den Durchbrüchen (9) teilweise in die Oberfläche an der Vorderseite des Trägers (2) eingepresst ist und wobei das erste Element (7) der Klettverbindung (8) an weiteren Stellen (10) in den tiefen Bereichen (4) teilweise in die Oberfläche an der Vorderseite des Trägers (2) eingepresst ist. Weiterhin bezieht sich die vorliegende Erfindung auf ein Flächentemperierungssystem (1), das mindestens ein flexibles Kunststoffrohr (5), dessen Außenseite zumindest teilweise von einem zweiten Element einer Klettverbindung (7) ummantelt ist, und mindestens eine erfindungsgemäße Haltefläche (1) umfasst.

## Beschreibung

Die vorliegende Erfindung betrifft eine Haltefläche für ein Flächentemperierungssystem, die einen Träger, der eine Reliefstruktur mit tiefen Bereichen und erhöhten Bereichen aufweist, und ein unmittelbar auf den Träger aufkaschiertes erstes Element einer Klettverbindung umfasst, wobei die Haltefläche eine Mehrzahl von Durchbrüchen aufweist und das erste Element der Klettverbindung in den erhöhten Bereichen und optional an den Rändern zu den Durchbrüchen teilweise in die Oberfläche an der Vorderseite des Trägers eingepresst ist.

Flächentemperierungssysteme und darin einsetzbare Halteflächen sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern zu festzulegen. Beispielsweise beschreibt die DE 20 2010 009 133 U1 ein Flächentemperierungssystem mit einer Klett-Faserplatte aus einem formstabilen, flächigen Träger mit einer Dicke zwischen 2,5 mm und 7 mm, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Aufgrund der Dicke des formstabilen flächigen Trägers ist ein derartiges Flächentemperierungssystem für den Einsatz bei Gebäudesanierungen, bei denen der bereits bestehende Estrich oder Bodenbelag nicht entfernt werden soll, ungeeignet.

Um eine möglichst geringe Aufbauhöhe des Flächentemperierungssystems schlägt die WO 2015/139898 A1 eine als Haltefläche bezeichnete Tiefziehfolie mit einer Reliefstruktur mit tiefen Bereichen und erhöhten Bereichen vor, wobei die tiefen Bereiche eine Rinne bilden, in der eine Rohrleitung zur Führung eines Temperierungsmediums aufgenommen werden kann. Auf eine Seite der Tiefziehfolie ist unmittelbar ein erstes Element einer Klettverbindung aufkaschiert. Die Haltefläche weist eine Mehrzahl an Durchbrüchen auf, durch die die für derartige Flächentemperierungssysteme eingesetzten, sehr fließfähigen Estriche meist auf Basis von Calciumsulfat treten können und so eine innige Verbindung zum bestehenden Untergrund eingehen können. In den in der WO 2015/139898 A1 beschriebenen Halteflächen ist das erste Element der Klettverbindung in den erhöhten Bereichen und optional an den Rändern zu den Durchbrüchen teilweise in die Oberfläche an der Vorderseite der Tiefziehfolie eingepresst. Eine derartige Haltefläche hat jedoch den Nachteil, dass eine damit verbundene Rohrleitung nach dem Vergießen mit Estrich wegen ihres eigenen Auftriebs während des Abbindens des Estrichs zusammen mit dem an der Rohrleitung anhaftenden ersten Element der Klettverbindung nach oben aufschwimmen kann und sich so an der Estrichoberfläche abzeichnet. Dies kann zu erheblichen Unebenheiten an der Estrichoberfläche führen, was wiederum in der Gefahr des Bruches von auf der unebenen Estrichoberfläche verlegten keramischen Bodenbelägen mündet. Dadurch wird ein weiterer Arbeitsschritt bei der Gebäudesanierung erforderlich, in dem die Unebenheiten an der Estrichoberfläche schleifend abgetragen werden müssen oder die Unebenheiten durch Aufbringen einer Ausgleichsmasse ausgeglichen werden müssen.

An dieser Stelle setzt die vorliegende Erfindung ein, deren Aufgabe darin liegt, eine Haltefläche sowie ein diese umfassendes Flächentemperierungssystem zur Verfügung zu stellen, die die Nachteile des Stands der Technik überwinden. Insbesondere soll die erfindungsgemäße Haltefläche bei niedriger Aufbauhöhe des Flächentemperierungssystems einen Nachbearbeitungsschritt nach dem Vergießen mit Estrich unnötig machen.

Diese und andere Aufgaben werden durch eine Haltfläche mit den Merkmalen des Anspruchs 1 bzw. durch ein Flächentemperierungssystem mit den Merkmalen des Anspruchs 9 gelöst. Bevorzugte Ausführungsformen der Erfindung sind in den abhängigen Ansprüchen beschrieben.

Gemäß der vorliegenden Erfindung wurde erkannt, dass eine schleifende oder ausgleichende Nachbearbeitung der Estrichoberfläche zum Ausgleich von Oberflächenunebenheiten nicht mehr erforderlich ist, wenn das erste Element der Klettverbindung an weiteren Stellen in den tiefen Bereichen mit dem Träger verbunden ist. Zwischen den Verbindungsstellen hängt das erste Element der Klettverbindung frei, was nach dem Vergießen mit Estrich zum Aufschwimmen der auf die Haltefläche aufgebrachten Rohrleitung zusammen mit dem an der Rohrleitung anhaftenden ersten Element der Klettverbindung führt. Dementsprechend kann die Rohrleitung bei Verwendung der erfindungsgemäßen Haltefläche nur in weit geringerem Umfang aufschwimmen, weil die Bereiche, in denen das erste Element der Klettverbindung lose ist, signifikant kleiner geworden sind. Damit treten an der Estrichoberfläche bei Verwendung der erfindungsgemäßen Haltefläche keine Unebenheiten mehr auf, die in einem Nachbearbeitungsschritt abgetragen werden müssten.

Dementsprechend liegt die vorliegende Erfindung in der Bereitstellung einer Haltefläche für ein Flächentemperierungssystem, die einen Träger, der eine Reliefstruktur mit tiefen Bereichen und erhöhten Bereichen aufweist, und ein unmittelbar auf den Träger aufkaschiertes erstes Element einer Klettverbindung umfasst, wobei die Haltefläche eine Mehrzahl von Durchbrüchen aufweist und das erste Element der Klettverbindung in den erhöhten Bereichen und optional an den Rändern zu den Durchbrüchen teilweise in die Oberfläche an der Vorderseite des Trägers eingepresst ist, wobei das erste Element der Klettverbindung an weiteren Stellen in den tiefen Bereichen teilweise in die Oberfläche an der Vorderseite des Trägers eingepresst ist. Darüber hinaus betrifft die vorliegende Erfindung ein Flächentemperierungssystem, das mindestens ein flexibles Kunststoffrohr, dessen Außenseite zumindest teilweise von einem zweiten Element einer Klettverbindung ummantelt ist, und mindestens eine erfindungsgemäße Haltefläche umfasst.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das erfindungsgemäße flexible Kunststoffrohr Biegeradien ermöglicht, die zur Verlegung eines Rohres für ein Flächentemperierungssystem erforderlich sind.

Hinsichtlich der erfindungsgemäßen Haltefläche ist es bevorzugt, wenn die tiefen Bereiche Rinnen zur Aufnahme eines flexiblen Kunststoffrohrs zur Führung eines Temperierungsmediums bilden. Dies führt zu einer gewünschten gleichmäßigen Verteilung des flexiblen Kunststoffrohrs an der erfindungsgemäßen Haltefläche und dadurch zur Gewährleistung einer über die Fläche gleichmäßigen Wärmeabgabe durch das erfindungsgemäße Flächentemperierungssystem.

Darüber hinaus kann es von Nutzen sein, wenn sich die weiteren Stellen, an denen das erste Element der Klettverbindung in den tiefen Bereichen teilweise in die Oberfläche an der Vorderseite des Trägers eingepresst ist, in jeweils etwa mittig zwischen zwei erhöhten Bereichen angeordnet ist. Auf diese Weise kann das Aufschwimmen des flexiblen Kunststoffrohres mit einer möglichst geringen Anzahl an weiteren Anbindungsstellen effektiv verringert werden.

Ebenso kann er hilfreich sein, wenn die weiteren Stellen punktförmig, kreisförmig, ringförmig, kreuzförmig, wellenförmig, linienförmig oder als eine Kombination der genannten Formen ausgebildet sind. Derartige Ausgestaltungen der die weiteren Stellen haben sich in der Praxis als besonders effektiv und einfach zu erzeugen erwiesen. Dabei kann es von Nutzen sein, wenn die weiteren Stellen linienförmig ausgebildet sind und sich zumindest eine der Linien vom Rand eines Durchbruches zum Rand eines benachbarten Rand eines Durchbruches und/oder vom Rand eines erhöhten Bereichs zum Rand eines benachbarten erhöhten Bereichs erstrecken. Dies gewährleistet eine besonders zuverlässige Verhinderung des Aufschwimmens des flexiblen Kunststoffrohrs. In diesen Zusammenhang ist es bevorzugt, wenn sich jeweils zwei der linienförmig ausgebildeten weiteren Stellen kreuzen. Eine derartige Ausgestaltung ist effektiv und einfach herzustellen.

Es kann bevorzugt sein, wenn der Träger als Tiefziehfolie ausgebildet ist. Unter Herstellungsgesichtspunkten ist eine Tiefziehfolie, insbesondere mit einer Wandstärke von etwa 0,5 mm bis 3 mm, vorzugsweise von 0,6 mm bis 2 mm, besonders geeignet.

Die erfindungsgemäße Haltefläche kann eine beliebige Form aufweisen. Bevorzugt sind jedoch Formen, die das vollständige Auslegen von Flächen ohne größere Überlappungsbereiche erlauben. Daher weist die erfindungsgemäße Haltefläche vorzugsweise eine rechteckige, quadratische oder sechseckige Form auf.

Bevorzugt beträgt der Höhenunterscheid zwischen den tiefen Bereichen und erhöhten Bereichen des Trägers etwa 1 mm bis 3 mm. Dadurch wird eine erheblich höhere Kontaktfläche zwischen dem ersten Element der Klettverbindung und dem flexiblen Kunststoffrohr des erfindungsgemäßen Flächentemperierungssystems gebildet.

Es kann auch günstig sein, wenn der Träger an seiner dem ersten Element der Klettverbindung abgewandten Seite selbstklebende Bereiche aufweist. Dies trägt zur einfachen Verlegbarkeit des erfindungsgemäßen Flächentemperierungssystems bei. Treten die Selbstklebeeigenschaften in Überlappungsbereichen zweier erfindungsgemäßer Halteflächen auf, können dadurch zwei benachbarte erfindungsgemäße Halteflächen miteinander verbunden werden. Erstrecken sich die Selbstklebeeigenschaften über die Überlappungsbereiche hinaus, können erfindungsgemäße Halteflächen so am Untergrund fixiert werden.

Hinsichtlich des erfindungsgemäßen Flächentemperierungssystems kann es sich als günstig erweisen, wenn das zweite Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und der erfindungsgemäßen Haltefläche.

Bevorzugt handelt es sich bei dem polymeren Material des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahlvernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefinen, insbesondere ein Maleinsäureanhydrid-gepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der erfindungsgemäßen Haltefläche reversibel festgelegt wird. Dabei ist es unter Kostengesichtspunkten bevorzugt, wenn das zweite Element der Klettverbindung die Haken, Schlingen und/oder Fasern aufweist, während das erste Element der Klettverbindung durch das Gewirke, das Vlies, das Veloursgewebe oder ein Plüsch-, Frottee- oder sonstiges textiles Flächengebilde gebildet wird. Umgekehrt ist es aber auch trotzdem möglich, dass das zweite Element der Klettverbindung durch das Gewirke, das Vlies, das Veloursgewebe, das Plüsch-, Frottee- oder sonstiges textiles Flächengebilde gebildet wird, während das erste Element der Klettverbindung die Haken, Schlingen und/oder Fasern aufweist.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1a einen Ausschnitt aus einer Haltefläche gemäß einer Ausführungsform der vorliegenden Erfindung;
Fig. 1b einen Ausschnitt aus einer Haltefläche gemäß einer weiteren Ausführungsform der vorliegenden Erfindung;
Fig. 1c einen Ausschnitt aus einer Haltefläche gemäß einer weiteren Ausführungsform der vorliegenden Erfindung;
Fig. 1d einen Ausschnitt aus einer Haltefläche gemäß einer weiteren Ausführungsform der vorliegenden Erfindung;
Fig. 2a einen Ausschnitt aus einem Flächentemperierungssystems gemäß einer Ausführungsform der vorliegenden Erfindung in einer Draufsicht; und
Fig. 2b eine Querschnittdarstellung des in Fig. 2a gezeigten erfindungsgemäßen Flächentemperierungssystems

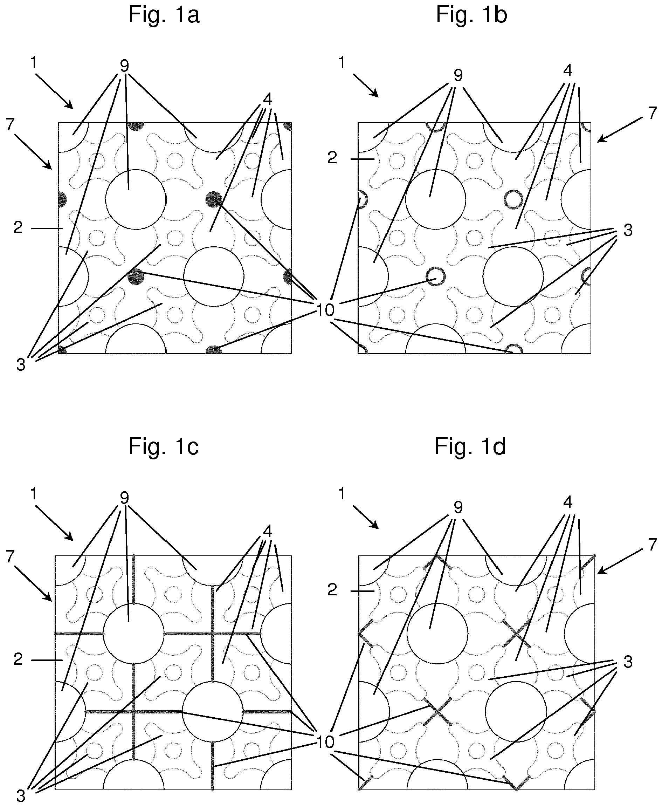

In Fig. 1 ist ein Ausschnitt aus einer Haltefläche 1 gemäß einer Ausführungsform der vorliegenden Erfindung gezeigt. Die erfindungsgemäße Haltefläche 1 umfasst einen in dieser Ausführungsform als Tiefziehfolie ausgebildeten Träger 2. Der Träger weist eine Wandstärke von vorzugsweise 0,5 mm bis 3 mm auf. In der gezeigten Ausführungsform beträgt die Wandstärke ca. 0,6 mm. Der Träger 2 weist erhöhte Bereiche 3 auf, die in der dargestellten Ausführungsform als Kreuze mit abgerundeten Übergängen ausgebildet sind. Zwischen den erhöhten Bereichen 3 liegen tiefe Bereiche 4. Dadurch entsteht eine Reliefstruktur, deren Höhe in der gezeigten Ausführungsform etwa 2,4 mm beträgt. Durch die tiefen Bereiche werden Rinnen ausgebildet, in die ein flexibles Kunststoffrohr 5 eines erfindungsgemäßen Flächentemperierungssystems 6 aufgenommen werden kann.

Auf den als Tiefziehfolie ausgebildeten Träger 2 ist ein erstes Element 7 einer Klettverbindung 8 aufkaschiert. Der Träger ist dabei vollflächig durch das erste Element 7 der Klettverbindung bedeckt. Das erste Element 7 der Klettverbindung 8 ist vorzugsweise als Gewirke ausgebildet, kann alternativ aber auch als Vlies, Veloursgewebe, Plüsch-, Frottee- oder sonstiges textiles Flächengebilde ausgebildet sein. Dazu ist das erste Element 7 der Klettverbindung 8 in den erhöhten Bereichen 3 in die Oberfläche an der Vorderseite des Trägers 2 eingepresst, was bevorzugt direkt bei der Herstellung beim Tiefziehen des Trägers 2 im angeschmolzenen Zustand des Trägers 2 erfolgen kann. Für eine lose Befestigung des ersten Elements 7 der Klettverbindung 8 am Träger 2 sind diese Befestigungsstellen völlig ausreichend.

Die erfindungsgemäße Haltefläche 1 weist darüber hinaus Durchbrüche 9 auf. Die Durchbrüche 9 gewährleisten ein Hindurchströmen des Estrichs durch die erfindungsgemäße Haltefläche 1 und dadurch eine stabile Verbindung der erfindungsgemäßen Haltefläche 1 zum vorhandenen Untergrund. Zur Herstellung einer stabileren Verbindung zwischen dem Träger 2 und dem ersten Element 7 kann in einem Randbereich mit einer Breite von etwa 2 mm um die Durchbrüche 9 das erste Element 7 ebenfalls in die Oberfläche des Trägers 2 eingepresst sein. Dies kein beispielsweise mittels einer profilierten Walze bei Ausstanzen der Durchbrüche 9 aus der erfindungsgemäßen Haltefläche 1 erfolgen.

In der erfindungsgemäßen Haltefläche 1 sind in den tiefen Bereichen 4 weitere Stellen 10 vorhanden, in denen das erste Element 7 der Klettverbindung 8 in die Oberfläche an der Vorderseite des Trägers 2 eingepresst ist. In der in Fig. 1 a dargestellten Ausführungsform sind diese weiteren Stellen 10 kreisförmig ausgebildet. Alternativ können die weiteren Stellen 10 auch punktförmig, ringförmig (Fig. 1b), kreuzförmig, wellenförmig, linienförmig (Fig. 1c und Fig. 1 d) oder als eine Kombination der genannten Formen ausgebildet sein. In der Ausführungsform gemäß Fig. 1c sind die weiteren Stellen 10 in Form von sich kreuzenden Linien ausgebildet, die sich jeweils zwischen zwei Durchbrüchen 9 in den tiefen Bereichen 4 erstrecken. In der Ausführungsform gemäß Fig. 1d sind die weiteren Stellen 10 wiederum in Form von sich kreuzenden Linien ausgebildet, die sich jedoch im Gegensatz zur Ausführungsform gemäß Fig. 1c jeweils zwischen zwei erhöhten Bereichen 3 in den tiefen Bereichen 4 erstrecken. Das Einpressen des ersten Elements 7 in die Oberfläche des Trägers 2 in den weiteren Stellen 10 kann mittels entsprechend geformter und beheizter Stempel erfolgen, für die Ausführungsform gemäß Fig. 1b beispielsweise mit einem entsprechenden beheizten Ringstempel. Bevorzugt sind die weiteren Stellen 10 jeweils etwa mittig zwischen zwei erhöhten Bereichen 3 angeordnet ist. Die weiteren Stellen machen das Netz von Verbindungstellen, in denen das erste Element 7 in die Oberfläche des Trägers 2 eingebettet ist, wesentlich engmaschiger. Dadurch wird ein freies Hängen des ersten Elements 7 zwischen den Verbindungsstellen aufgrund eines Verringerns des Abstands zwischen den Verbindungsstellen wirksam verringert. Dadurch kann das flexible Kunststoffrohr 5 nur in weit geringerem Umfang aufschwimmen. Damit treten an der Estrichoberfläche bei Verwendung der erfindungsgemäßen Haltefläche 1 keine Unebenheiten mehr auf, die in einem Nachbearbeitungsschritt abgetragen oder ausgeglichen werden müssten.

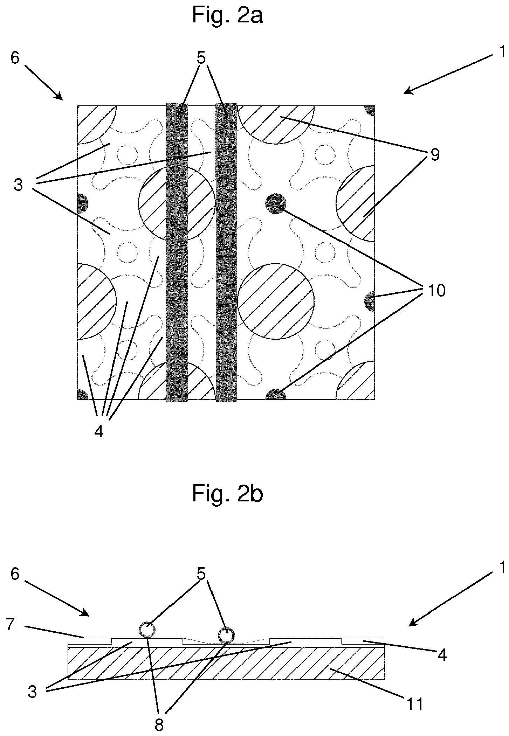

In Fig. 2a ist ein erfindungsgemäßes Flächentemperierungssystem 6 in einer Ausschnittdarstellung von oben gezeigt. Das erfindungsgemäße Flächentemperierungssystem 6 umfasst dabei ein flexibles Kunststoffrohr 5 und eine erfindungsgemäße Haltefläche 1. Die Außenseite des flexiblen Kunststoffrohrs 5 ist in Form von Spiralen von einem zweiten Element der Klettverbindung 7 gebildet. Das flexible Kunststoffrohr 5 umfasst eine erste Schicht aus polymerem Material, die ein Lumen zur Führung eines Wärmeträgermediums umgibt. Die erste Schicht des flexiblen Kunststoffrohrs 5 ist vorzugsweise aus Peroxidvernetztem Polyethylen (PE-Xa), um das herum in der angegeben Reihenfolge eine Haftvermittlerschicht und eine Diffusionssperrschicht angeordnet sind. Bevorzugt ist die erste Schicht sauerstoffdicht gemäß DIN 4726 und wird vorzugsweise durch Coextrusion hergestellt. Die Außenseite des flexiblen Kunststoffrohres 5 bildet das zweite Element der Klettverbindung 7, das in Form von Bändern ausgebildet ist, die in im Wesentlichen parallel zueinander verlaufenden Spiralen um die erste Schicht angeordnet sind. Das zweite Element der Klettverbindung 7 umfasst Haken, Fasern oder ähnliches.

Das flexible Kunststoffrohr 5 ist in dem erfindungsgemäßen Flächentemperierungssystem 6 auf die erfindungsgemäße Haftfläche 1, in der das erste Element 7 flächig auf den Träger 2 aufgebracht ist, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 5, an dessen Außenseite sich das zweite Element der Klettverbindung 7 befindet, ist auf dem ersten Element 7 lösbar unter Bildung der Klettverbindung 7 an der erfindungsgemäßen Haftfläche 1 festgelegt.

Das flexible Kunststoffrohr 5 verläuft bevorzugt in den durch die tiefen Bereiche 4 gebildeten Rinnen, um die Aufbauhöhe des erfindungsgemäßen Flächentemperierungssystems 6 niedrig zu halten. Alternativ oder zusätzlich kann das flexible Kunststoffrohr 5 aber auch über die erhöhten Bereichen 3 verlaufen. Beides geht aus der Querschnittdarstellung gemäß Fig. 2b hervor. Dies bedingt zwar eine höhere Aufbauhöhe des erfindungsgemäßen Flächentemperierungssystems 6, lässt sich aber teilweise zumindest in den Umlenkbereichen nicht verhindern.

Zum Verlegen eines als Fußbodenheizung ausgebildeten erfindungsgemäßen Flächentemperierungselements 6 wird die erfindungsgemäße Haltefläche 1 zunächst auf dem vorhandenden Untergrund 11 vollflächig ggf. nach vorherigem Zuschneiden ausgelegt. Vorzugsweise werden benachbarte erfindungsgemäße Halteflächen 1 in Überlappungsbereichen aufgrund von selbstklebenden Bereichen an der Unterseite des Trägers 2 miteinander verbunden. Zusätzlich oder alternativ dazu können die erfindungsgemäßen Halteflächen 1 aufgrund der selbstklebenden Bereiche an der Unterseite des Trägers 2 auch auf den Untergrund 11 aufgeklebt und dadurch vorfixiert werden. Daraufhin wird das flexible Kunststoffrohr 5 im gewünschten Muster auf den erfindungsgemäßen Halteflächen 1 verlegt und angedrückt, so dass eine Klettverbindung 8 ausgebildet wird. Zur Korrektur des Verlegemusters kann die reversibel ausgebildete Klettverbindung 8 durch Anheben des flexiblen Kunststoffrohrs 5 gelöst werden, wonach dieses erneut verlegt werden kann. Abschließend wird die Anordnung mit Estrich vergossen. Durch das engmaschige Netz von Stellen und/oder Bereichen, in denen das erste Element 7 der Klettverbindung 8 in die Oberfläche des Trägers 2 eingepresst ist, ist ein Aufschwimmen des flexiblen Kunststoffrohrs 5 während des Härtens des Estrichs erheblich reduziert. Damit treten nach der Aushärtung des Estrichs keine durch das Aufschwimmen des flexiblen Kunststoffrohrs 5 verursachten Unebenheiten mehr auf, ein Nachbearbeitungsschritt, durch den diese Unebenheiten abgetragen oder ausgeglichen werden müssten, ist nicht erforderlich.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Haltefläche (1) für ein Flächentemperierungssystem (6), umfassend:
- einen Träger (2), der eine Reliefstruktur mit tiefen Bereichen (4) und erhöhten Bereichen (3) aufweist; und
-- ein unmittelbar auf den Träger (2) aufkaschiertes erstes Element (7) einer Klettverbindung (8);
wobei die Haltefläche (1) eine Mehrzahl von Durchbrüchen (9) aufweist und das erste Element (7) der Klettverbindung (8) in den erhöhten Bereichen (3) und optional an den Rändern zu den Durchbrüchen (9) teilweise in die Oberfläche an der Vorderseite des Trägers (2) eingepresst ist,
**dadurch gekennzeichnet, dass**
das erste Element (7) der Klettverbindung (8) an weiteren Stellen (10) in den tiefen Bereichen (4) teilweise in die Oberfläche an der Vorderseite des Trägers (2) eingepresst ist.

2. Haltefläche (1) nach Anspruch 1, **dadurch gekennzeichnet, dass** die tiefen Bereiche (4) Rinnen zur Aufnahme eines flexiblen Kunststoffrohrs (5) zur Führung eines Temperierungsmediums bilden.

3. Haltefläche (1) nach Anspruch 1 oder Anspruch 2, **dadurch gekennzeichnet, dass** sich die weiteren Stellen (10), an denen das erste Element (7) der Klettverbindung (8) in den tiefen Bereichen (4) teilweise in die Oberfläche an der Vorderseite des Trägers (2) eingepresst ist, in jeweils etwa mittig zwischen zwei erhöhten Bereichen (3) angeordnet ist.

4. Haltefläche (1) nach einem der Ansprüche 1 bis 3, **dadurch gekennzeichnet, dass** die weiteren Stellen (10) punktförmig, kreisförmig, ringförmig, kreuzförmig, wellenförmig, linienförmig oder als eine Kombination der genannten Formen ausgebildet sind.

5. Haltefläche (1) nach Anspruch 4, **dadurch gekennzeichnet, dass** die weiteren Stellen (10) linienförmig ausgebildet sind und sich zumindest eine der Linien vom Rand eines Durchbruchs (9) zum Rand eines benachbarten Rand eines Durchbruchs (9) und/oder vom Rand eines erhöhten Bereichs (3) zum Rand eines benachbarten erhöhten Bereichs (3) erstrecken.

6. Haltefläche (1) nach Anspruch 4, **dadurch gekennzeichnet, dass** sich jeweils zwei der linienförmig ausgebildeten weiteren Stellen (10) kreuzen.

7. Haltefläche (1) nach einem der Ansprüche 1 bis 6, **dadurch gekennzeichnet, dass** der Träger (2) als Tiefziehfolie ausgebildet ist.

8. Haltefläche (1) nach einem der Ansprüche 1 bis 7, **dadurch gekennzeichnet, dass** der Träger (2) an seiner dem ersten Element (7) der Klettverbindung (8) abgewandten Seite selbstklebende Bereiche aufweist.

9. Flächentemperierungssystem (1), umfassend:
- mindestens ein flexibles Kunststoffrohr (5), dessen Außenseite zumindest teilweise von einem zweiten Element einer Klettverbindung (7) ummantelt ist;
- mindestens eine Haltefläche (1) nach einem der Ansprüche 1 bis 8.
